## Europäisches Patentamt
## European Patent Office
## Office européen des brevets

(19)

(11) Veröffentlichungsnummer: **0 294 368**
**B1**

(12) **EUROPÄISCHE PATENTSCHRIFT**

(45) Veröffentlichungstag der Patentschrift: **19.09.90**

(51) Int. Cl.⁵: **B 62 D 65/00**

(21) Anmeldenummer: **87900105.5**

(22) Anmeldetag: **05.12.86**

(86) Internationale Anmeldenummer:
**PCT/EP86/00711**

(87) Internationale Veröffentlichungsnummer:
**WO 87/04680 13.08.87 Gazette 87/18**

(54) **VERFAHREN ZUR MONTAGE VON FAHRZEUGEN, SOWIE VORRICHTUNG ZUM DURCHFÜHREN DES VERFAHRENS.**

(30) Priorität: **06.02.86 DE 3603709**

(43) Veröffentlichungstag der Anmeldung:
**14.12.88 Patentblatt 88/50**

(45) Bekanntmachung des Hinweises auf die Patenterteilung:
**19.09.90 Patentblatt 90/38**

(84) Benannte Vertragsstaaten:
**DE FR IT**

(56) Entgegenhaltungen:
**EP-A-0 171 576**
**DE-A-3 150 476**
**FR-A-2 185 567**

(73) Patentinhaber: **AUDI AG**
**Auto-Union-Strasse 1 Postfach 220**
**D-8070 Ingolstadt (DE)**

(72) Erfinder: **KÖNIG, Helmut**
**Hofstrasse 12**
**D-8070 Ingolstadt (DE)**

(74) Vertreter: **Engelhardt, Harald**
**Audi AG Postfach 2 20**
**D-8070 Ingolstadt (DE)**

EP 0 294 368 B1

**Beschreibung**

Die Erfindung betrifft ein Verfahren der im Oberbegriff des Patentanspruchs 1 angegebenen Art sowie eine Vorrichtung zur Durchführung des Verfahrens.

Es ist bereits vorgeschlagen worden, bei vorderradgetriebenen Personenkraftwagen mit selbsttragender Karosse die Antriebseinheit aus Motor, Getriebe und den Vorderrädern sowie die Aufhängung und Lenkung für die Vorderräder in einem sogenannten Vorderrahmen vorzumontieren und diese vormontierte Baugruppe dann von unten in die Karosse einzubringen und daran zu befestigen. Die weitere Montage von Fahrwerksteilen, der Hinterachse und zusätzlichen Anbauteilen muß über Kopf erfolgen, was nicht nur mühsam und zeitaufwendig sondern für den Einsatz von Industrierobotern oder automatischen Hilfseinrichtungen ungünstig ist. Außerdem ist der Einsatz dieses Verfahrens auch an die Verwendung eines Vorderrahmens gebunden, der später integraler Bestandteil des Fahrzeuges ist.

Ferner ist aus der DE—A1—3 150 476 eine automatisch betreibbare Montageeinrichtung für Personenkraftwagen bekannt, bei der die Fahrzeug-Antriebseinheit mit Radträgern und Aufhängungsteilen aus einem horizontal bewegbaren Rahmen vormontiert wird, ehe sie unter den Aufbau bewegt und von einem Hubtisch mit daran angeordneten Werkzeugen vertikal in den Aufbau gehoben und daran befestigt wird. Dabei läßt sich die Antriebseinheit vertikal von dem Rahmen abheben. Die weiteren Bauteile und Baugruppen des Fahrwerks werden einzeln angebracht und müssen dabei in die spätere Relativlage bezüglich der vormontierten Antreibseinheit gebracht werden. Für die Benutzung automatischer Montageeinrichtungen, wie Robotern oder Hilfseinrichtungen, ist diese Montageeinrichtung deshalb nicht befriedigend.

Die FR—A—2 185 567 beschreibt ebenfalls ein Verfahren zum Komplettieren eines Fahrzeugaufbaus mit dem Antriebsaggregat und Bauteilen des Antriebes. Dieses Verfahren wird bereits seit langer Zeit in der Automobilindustrie angewandt. Bei frontangetriebenen Fahrzeugen werden gemäß diesem Verfahren das Antriebsaggregat, also der Motor und das Getriebe, die Antriebswellen mit Bremstrommeln bzw. -scheiben und Teile der vorderen Radaufhängung mit den Federbeinen montiert. Bei heck- oder allradgetriebenen Fahrzeugen werden gleichzeitig die mit dem Antriebsaggregat über die Kardanwelle festverbundenen Bauteile, wie Differenzial und hintere Antriebseinheiten, als eine große Baugruppe von unten her an den Aufbau herangefahren und mit diesem verbunden.

Der Erfindung liegt die Aufgabe zugrunde, ein Verfahren der eingang genannten Art sowie eine zum Durchführen des Verfahrens geeignete Vorrichtung zu schaffen, die eine erleichterte und schnelle Montage zulassen und dabei einen weitestgehenden Einsatz von Robotern oder Hilfswerkzeugen ermöglichen und bei denen nur ganz wenige Montagearbeiten über Kopf auszuführen sind.

Die Aufgabe wird mit einem Verfahren gelöst, das sich aus den im kennzeichnenden Teil des Patentanspruchs 1 angegebenen Merkmalen ergibt.

Bei diesem Verfahren können die Werker aber auch die Roboter und Hilfseinrichtungen im wesentlichen horizontal an dem Montagerahmen arbeiten und die Baugruppen und Bauteile schon in ihren richtigen späteren Relativlagen im Aufbau fertigmontieren. Dabei ist zunächst überhaupt keine Über-Kopf-Arbeit erforderlich, weil der Aufbau noch fehlt. Aufgrund der fehlenden Über-Kopf-Arbeit können einfachere und preiswertere Roboter und Hilfseinrichtungen eingesetzt werden. Da das komplette Fahrwerk mit dem Aufbau nur mehr in wenigen Verbindungspunkten zu verbinden ist, ist die abschließende Über-Kopf-Arbeit einfach und problemlos durchzuführen. Zur Durchführung des Verfahrens ist am Montageband nur mehr eine relativ kurze Strecke erforderlich. Gegebenenfalls kann die Vormontage der Bauteile und Baugruppen auf dem Montagerahmen auch neben oder getrennt von dem Endmontageband erfolgen. Durch den Einsatz des Montagerahmens lassen sich die einzelnen Aggregate und Baugruppen in der richtigen Position und Lage zueinander festlegen, obwohl beispielsweise zwischen der vorderen und hinteren Baugruppe kein distanzhaltendes Teil vom später fertigen Fahrzeug vorhanden ist.

Die Bauteile, soweit diese nicht aneinander befestigt oder abgestützt sind, werden im wesentlichen senkrecht auf den Montagerahmen aufgesetzt und sind dort nur durch ihr Eigengewicht lagegesichert. Der Montagerahmen, welcher im wesentlichen in senkrechter Richtung an den Aufbau herangeführt wird, kann somit nach dem Befestigen der Bauteile im wesentlichen senkrecht nach unten wegbewegt werden. Die Fixierung der genannten Bauteile nur durch ihr Eigengewicht ist deshalb zweckmäßig, weil sich damit einfach beherrschbare Bewegungen mit kurzen Hüben ergeben und weil die Roboter und Hilfseinrichtungen keine Hilfsverbindungen zwischen den Baugruppen und Bauteilen und dem Montagerahmen herzustellen brauchen, weil diese Elemente durch das Eigengewicht oder durch einen speziellen Formschluß oder auch durch die Abstützung aneinander lagegesichert werden.

Gemäß dem vorgeschlagenen Verfahren werden vor dem Heranfahren des Montagerahmens an den Aufbau Endeinstellungen, Funktionsprüfungen sowie ein Probelauf durchgeführt. Die auf dem Montagerahmen festgelegten Bauteile und Baugruppen werden also vor ihrem Anfügen an den Aufbau einer Überprüfung, zweckmäßigerweise in ihrer Zusammenwirkung, unterzogen, was üblicherweise bisher erst nach der Befestigung der Bauteile bzw. Baugruppen am Aufbau vorgenommen werden konnte. Die Überprüfungen und Einstellungen können die Spur- und Sturzeinstellungen der Räder, die Bremskontrollen und auch komplette Probeläufe des Fahrwerks mit laufendem Motor umfassen. Besonders günstig ist dabei, daß zu den einzelnen Komponenten ungehinderter Zutritt besteht, und daß fehlerhafte Teile oder Funktionsstörungen rasch und einfach behoben werden können, weil der Aufbau noch nicht stört und die Verbindungen zum Aufbau noch nicht hergestellt sind.

Der aus der FR—A—2 185 567 bekannte Montagerahmen ist dagegen nur eine Hilfseinrichtung, die dazu dient die vormontierte Baugruppe dem Aufbau zuzuführen. Spezielle Aufnahmen, die dazu dienen Bauteile so auf dem Montagerahmen zu fixieren, daß sie dort bereits in ihrer späteren Relativlage fixiert sind, sind nicht vorgesehen. Dies ist auch nicht notwendig, da die auf dem Montagerahmen aufgelegte Baugruppe nur aus Bauteilen besteht die bereits fest miteinander verbunden sind so daß sie nicht in ihrer Lage zusätzlich fixiert werden müssen. Eine solche Baueinheit könnte — abgesehen von dem hohen Gewicht — auch von Hand von unten her an den Aufbau herangeführt und mit diesem verbunden werden. Der bekannte Montagerahmen hat demnach nur Transportaufgaben.

Der in dem vorgeschlagenen Verfahren eingesetzte Montagerahmen übernimmt hingegen wesentlich weiterreichende Aufgaben und ermöglicht dadurch eine wirtschaftlichere Endmontage. Der Montagerahmen nimmt Bauteile und Baugruppen auf, die nicht miteinander verbunden sind und bringt sie in ihre richtige spätere Relativlage zueinander. Der Montagerahmen stellt also eine echte Montagelehre dar und schafft darüberhinaus die Voraussetzung dafür, daß eine schnellere, genauere und eine mechanisierte Montage möglich ist. Die Vorgehensweise nach dem neuen Verfahren erlaubt außerdem gut zugängliche Funktionsprüfungen und Einstellarbeiten, die an einem Nebenband oder einer Nebenstelle, also nicht am Endmontageband, ausgeführt werden können. Die möglichen Prüf- und Einstellarbeiten können je nach dem Komplettierungsgrad des Montagerahmens sehr umfassend sein und beispielsweise auch die Scheinwerfereinstellung und die Einstellung der Federbeine umfassen, wenn — wie bei dem nachfolgenden Ausführungsbeispiel — das komplette Front-End auf den Montagerahmen aufgesetzt wird.

Das Verfahren läßt sich sehr kostengünstig und rasch und mit gleichbleibender Qualität gemäß Anspruch 2 durchführen.

Da die Verbindungen des kompletten Fahrwerks mit dem Aufbau sehr einfach zu vollziehen sind, sind auch hierbei gemäß Anspruch 3 keine Arbeitskräfte mehr erforderlich. Trotzdem können die hier eingesetzten Roboter und Hilfseinrichtungen einfach sein, weil sie nur einfache Bewegungen über kleine Hübe auszuführen brauchen.

Zur Durchführung des Verfahrens eignet sich erfindungsgemäß eine Vorrichtung, wie sie aus Anspruch 4 hervorgeht. Der Montagerahmen ist ein einfacher und preiswert herstellbarer Teil, der in Konzeption auf einen Fahrzeugtyp bzw. auf eine auf diesen Typ aufbauende Baureihe abgestimmt sein kann. Die Lagesicherungselemente des Montagerahmens tragen dafür Sorge, daß die Bauteile und Baugruppen des Fahrwerks auf dem Montagerahmen in ihren späteren Endlagen aufsetzbar und mit den anderen Komponenten verbindbar sind. Die Längs- und Querträger des Rahmens gestatten es auch, von der Seite oder von unten an die Bauteile oder Baugruppen heranzukommen, falls dies erforderlich ist. Von oben oder von der Seite ist der Zugriff ohnedies vollständig frei.

Zweckmäßig ist ferner die Ausführungsform von Anspruch 5, weil der senkrecht lösbare Formschluß den Vorteil hat, daß die eingesetzten Roboter oder Hilfseinrichtungen keine Verbindungen zwischen den Baugruppen und Bauteilen und dem Montagerahmen herstellen müssen, damit die Bauteile und Baugruppen ihre spätere Lage einnehmen. Es genügt, sie von oben auf den Montagerahmen aufzusetzen und so zu arretieren, daß sie später nach der Endmontage des Aufbaues sich im Ganzen vom Montagerahmen nach oben abziehen lassen.

Eine baulich einfache Ausführungsform des Montagerahmens geht aus Anspruch 6 hervor. Diese Stützen können in ihrer Länge und Anordnung auf einfache Weise mittels der Recheneinrichtungen vorher bestimmt werden, die auch für die Konzeption und Unterbringung der Bauteile und Baugruppen im Aufbau verantwortlich sind, weil diese die räumlichen Koordinaten der Bauteile und Baugruppen und damit auch der Abstützpunkte auf dem Montagerahmen kennen.

Baulich besonders einfach ist die Ausführungsform von Anspruch 7, da die gabelförmigen Auflagen für einen guten Formschluß unter dem Eigengewicht der Bauteile oder Baugrupen sorgen und einfach und preiswert herstellbar sind. Trotzdem ist der Montagerahmen mit solchen Auflagen in einer geradlinigen Bewegung einfach vom Fahrwerk zu trennen.

Alternativ dazu könnten auch die Maßnahmen von Anspruch 10 zweckmäßig sein, wobei die lösbaren Halterungen, Rastelemente, Klammern oder dgl. zum Festlegen kleinerer Bauteile oder im Gesamtverbund instabil vorliegender Bauteile benutzt werden können, die später am Aufbau und nicht an den anderen Bauteilen oder Baugruppen abgestützt sind.

Zweckmäßig ist auch das Merkmal von Anspruch 9, weil verstellbare Stützen die Verwendung ein- und desselben Montagerahmens für unterschiedliche Typen einer Baureihe gestatten. Der Rahmen weist beispielsweise nebeneinandergesetzte Aufnahmelöcher auf, in die die Stützen jeweils einsteckbar sind und somit für jeden Fahrzeugtyp einen angepaßten Montagerahmen bietet. Außerdem sind an seitlich verschiebbare Lagerungen gemäß einer Koordinatenverschiebung gedacht, wodurch die Lagesicherungselemente bzw. die Stützen auf die gewünschten Lagerpunkte genau einjustiert werden können.

In die gleiche Richtung zielen die Merkmale von Anspruch 10. Die Stützen weisen teleskopartige Verstellmöglichkeiten auf, um auf die gewünschte Position gebracht werden zu können.

Günstig ist ferner das Ausführungsbeispiel von Anspruch 11, weil der Montagerahmen mit dem vormontierten Fahrwerk auf diese Weise einfach zum Aufbau bewegbar ist. Umgekehrt ist auch denkbar, daß der Montagerahmen nur unter den Aufbau bewegt wird, ehe der Aufbau von oben aufgesetzt wird. Dann könnten die Roboter oder Hilfseinrichtungen, die zum Montieren des Fahrwerks auf dem Montagerahmen eingesetzt worden sind, entsprechend programmiert sein, daß sie auch für das Herstellen der Verbindungen zwischen dem Fahrwerk und dem Aufbau verantwortlich sind.

Schließlich ist auch das Merkmal von Anspruch 12 wichtig, weil die Durchgänge dann den entsprechenden Zugriff zu den Verbindungsstellen freihalten, an denen das fertigmontierte Fahrwerk mit dem Aufbau zu verbinden ist.

Anhand der Zeichnungen wird ein Ausführungsbeispiel des Erfindungsgegenstandes nachstehend beschrieben.

Es zeigen.

Fig. 1 eine perspektivische Schemadarstellung eines mit Baugruppen bestückten Montagerahmens und

Fig. 2 den Montageschritt beim Zusammenführen des Aufbaus mit den auf dem Montagerahmen positionierten Baugruppen.

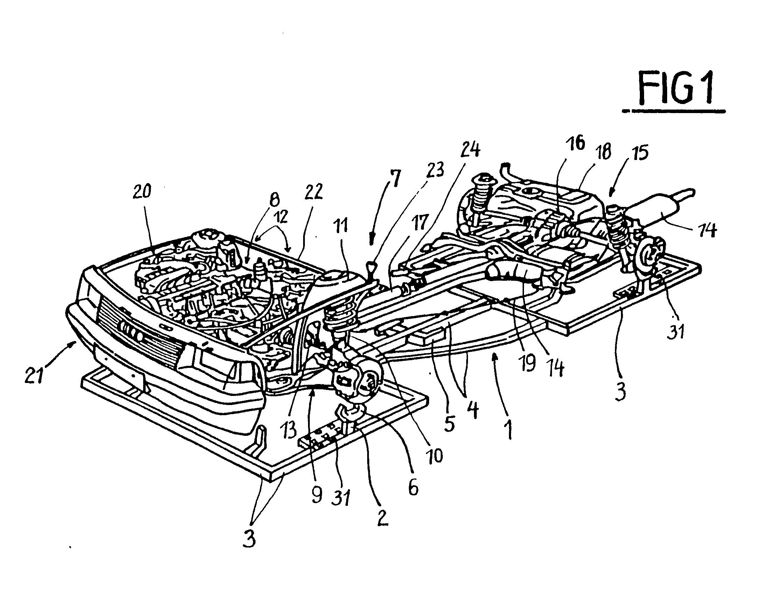

Gemäß Fig. 1 wird auf einem Montagerahmen (1) mit lehrenartigem Charakter, der in seinem Umriß im wesentlichen dem Umriß eines später zu montierenden Aufbaus entspricht und aus Längs- und Querträgern (3, 4) sowie aus Lagesicherungselementen (2) und (5) besteht, ein komplettes Fahrwerk (7) fertigmontiert. Die Lagesicherungselemente (2) und (5) sind beispielsweise vertikal vom Rahmen (1) hochstrebende Stützen oder Ausleger, wobei einige der Stützen (2) mit gabelförmigen Auflagen (6) versehen sind, auf denen die Bauteile oder Baugruppen des Fahrwerks (7) im wesentlichen allein durch ihr Eigengewicht lagegesichert werden. Anstelle der gabelförmigen Auflagen (6) könnten auch Klammern, Verrastungen oder andere leicht durch senkrechte Bewegungen lösbare Halteelemente vorgesehen sein, die zum Festhalten kleinerer oder instabiler Bauteile dienen, die sich nicht an anderen Bauteilen abstützen, so lange das Fahrwerk nicht am Aufbau befestigt ist. Die Lagesicherungselemente (2, 5) stecken beispielsweise in am Montagerahmen (1) vorgesehenen Rastlöchern (31), die nebeneinander zum Neupositionieren der Lagesicherungselemente (2) vorgesehen sind.

Das Fahrwerk (7) besteht aus dem Triebwerk (8) mit dem kompletten Motor, an dem das Getriebe angeflanscht ist, das mit seinen Gelenkwellen und Schwenklagern versehen ist. Ferner ist am Triebwerk (8) ein Hilfsrahmen montiert (nicht dargestellt), der im späteren Fahrzeug einen integrierten Bauteil bildet. Ferner können zum Triebwerk abhängig von der Ausstattung des Fahrzeugs ein Kompressor für eine Klimaanlage oder ähnliche Hilfseinrichtungen gehören (nicht gezeigt). Auf dem Montagerahmen (1) sind ferner die kompletten Längsträger (9) mit Federbeinaufnahmen (11) und den Federbeinen (10) angeordnet, die für sich vormontierte Baugruppen sein können. Auf dem Montagerahmen (1) werden ferner schon die linken und rechten Maschinenleitungssätze (12) vormontiert. Ferner ist ein Lenkgetriebe (13) mit seinen Anschlüssen an die Radträger und die Abstützung, beispielsweise am Längsträger, anmontiert. Auf dem Montagerahmen (1) ist ferner die komplette Abgasanlage abgestützt und an das Triebwerk angeschlossen, wobei von der Abgasanlage die Schalldämpfer und ggfs. Katalysatoren (14) angedeutet sind. Ferner ist auf dem Montagerahmen (1) eine komplette Hinterachse (15) vormontiert, die bei einem Allradantrieb bereits mit einem Differential (16) ausgestattet sein kann. Die Antriebsverbindung zwischen dem Triebwerk (8) und der Hinterachse (15) wird durch eine Kardanwelle (17) bewerkstelligt, deren Lagerungen bereits in der späteren korrekten Lage auf dem Montagerahmen (1) positioniert sind. Ferner ist ein Kraftstoffbehälter (18) auf den Montagerahmen (1) aufgesetzt und zwar in seiner späteren korrekten Lage im Aufbau. Kraftstoffleitungen und Bremsrohrleitungen (19) sind ebenfalls bereits verlegt und angeschlossen. Dem Motor (8) zugeordnete Brennstoffaufbereitungseinrichtungen, wie z.B. ein Mengenteiler (20) sind ebenfalls vormontiert, wie auch für die Kühlung benötigte Zusatzteile. Auf dem Montagerahmen (1) ist ferner das vormontierte Frontende (21) lagegesichert und mit den anderen Baugruppen oder Bauteilen verbunden, wobei das Frontende z.B. aus dem Windfang, dem Frontkühler oder Ladeluftkühler bei einem aufgeladenen Motor, den Scheinwerfern, Ziergittern, Stoßfängern, Frontspoilern und dgl. besteht. Ein eventuell vorgesehener Wasserbehälter für die Scheinwerferreinigungsanlage kann ebenfalls eingesetzt sein. Schließlich sind auch Spritz und Stirnwandkomponenten (22) sowie eine Getriebeschaltung (23) und eine Handbremse (24) eingesetzt.

Bei dem auf diese Weise auf dem Montagerahmen (1) vormontierten Fahrwerk (7) können die Füllungen, z.B. Kühlmittel, Öl, Getriebeöl, Bremsflüssigkeit, Reinigungsflüssigkeiten und dgl. bereits vorgesehen sein.

Nachdem das Fahrwerk (7) in der vorerwähnten Weise vormontiert worden ist, werden zweckmäßigerweise Spur und Sturz eingestellt und Probeläufe des gesamten Fahrwerks (7) sowie Funktionsprüfungen der einzelnen Komponenten insgesamt vorgenommen, wobei festgestellte Fehler oder Fehlfunktionen aufgrund der guten Zugänglichkeit einfach und rasch behoben werden können.

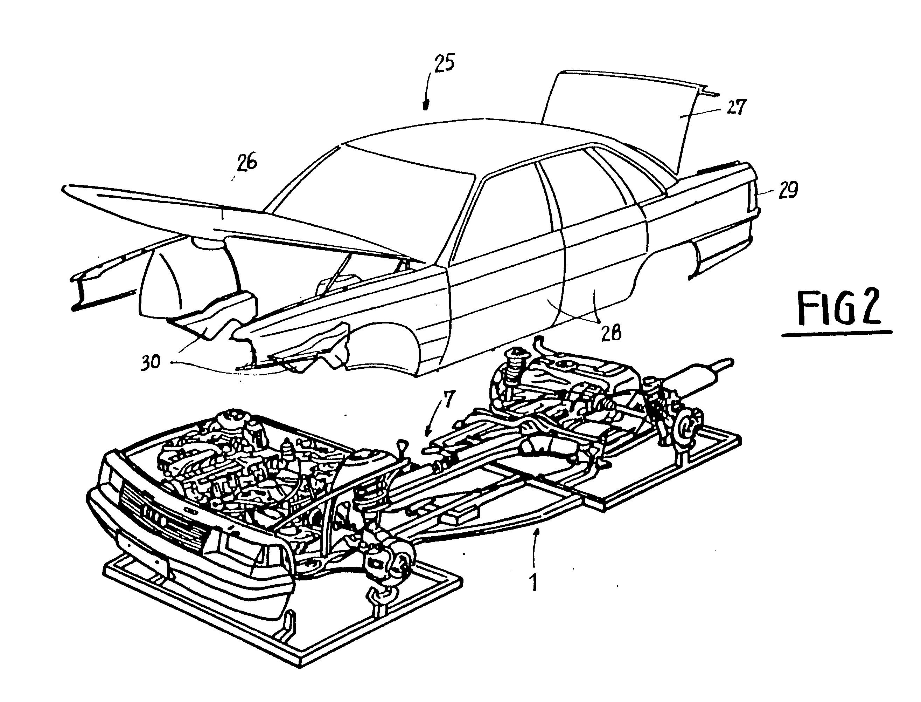

Danach wird gemäß Fig. 2 entweder der Montagerahmen (1) mit dem fertigmontierten Fahrwerk (7) unter einen bereits vorbereiteten Aufbau (25), an dem auch eine Fronthaube (26), eine Heckklappe (27) und Türen (28) schon angeschlagen sind, bewegt oder es wird der Aufbau (25) über den Montagerahmen (1) bewegt. Im Aufbau (25) können ferner dann noch zusätzliche Aufbauteile (30) befestigt oder zumindest bereitgestellt werden. Die Heckleuchten (29) sind zweckmäßigerweise ebenfalls schon im Aufbau (25) vorgesehen. Danach werden der Aufbau (25) und der Montagerahmen (1) zusammengeführt, und die wenigen erforderlichen Verbindungen werden zwischen dem Fahrzeug (7) und dem Aufbau (25) hergestellt. Dazu können Roboter oder Hilfseinrichtungen durch freie Aussparungen im Montagerahmen (1) durchgreifen. Nach der Verbindung des Fahrwerks (7) mit dem Aufbau (25) wird der Montagerahmen (1) bzw. das montierte Fahrzeug in senkrechter Richtung abgezogen, wobei sich die Verbindungen zwischen dem Fahrwerk und dem Montagerahmen (1) selbsttätig lösen.

**Patentansprüche**

1. Verfahren zur Montage von Personenkraftwagen mit einem selbsttragenden Aufbau (25), wobei das Antriebsaggregat (8) einschließlich der Antriebseinheiten (15, 16, 17) und Teile des Fahrwerks (10) entsprechend ihrer späteren Lagen im Aufbau (25) auf einem Montagerahmen (1) von der Unterseite des Aufbaus (25) her im wesentlichen in senkrechter Richtung an den Aufbau (25) herangeführt und mit dem Aufbau (25) verbunden werden, dadurch gekennzeichnet, daß alle für die Funktion des Antriebsaggregats (8) notwendigen Bauteile endlagerichtig auf dem Montagerahmen (1) aufgelegt werden, daß alle Bauteile der Bremseinrichtung endlagerichtig auf den Montagerahmen (1) aufgelegt und miteinander verbunden werden, daß die Bauteile, soweit sie nicht aneinander befestigt oder abgestützt sind, nur durch ihr Eigengewicht auf dem Montagerahmen (1) lagegesichert sind, daß vor dem Heranfahren des Montagerahmens (1) an den Aufbau (25) an dem Fahrwerk (7) Endeinstellungen vorgenommen werden, daß vor dem Heranfahren des Montagerahmens (1) an den Aufbau Funktionsprüfungen an der Bremseinrichtung durchgeführt werden, und daß vor dem Heranfahren des Montagerahmens (1) an den Aufbau (25) Einstellarbeiten und ein Probelauf des Antriebsaggregats (8) durchgeführt werden.

2. Verfahren nach Anspruch 1, dadurch gekennzeichnet, daß die Bauteile bzw. Baugruppen mit Robotern oder automatischen Hilfseinrichtungen auf dem Montagerahmen (1) positioniert und fertigmontiert werden.

3 Verfahren nach Anspruch 1, dadurch gekennzeichnet, daß das Fahrwerk (7) mit Robotern und/ oder automatischen Hilfseinrichtungen mit dem Aufbau (25) verbunden wird.

4. Vorrichtung zum Durchführen des Verfahrens nach den Ansprüchen 1 bis 3, gekennzeichnet durch einen im wesentlichen flächigen, anhebbaren Montagerahmen (1) aus Längsund Querträgern (3, 4) in einer annähernd dem Umriß des Aufbaus (25) entsprechenden Form, an dem oberseitig Lagesicherungselemente (2, 5) für die Bauteile bzw. Baugruppen des Fahrwerks (7) derart angeordnet sind, daß die Bauteile bzw. Baugruppen von oben aufsetzbar und in ihren späteren Relativlagen im Aufbau (25) zusammenmontierbar sind.

5. Vorrichtung nach Anspruch 4, dadurch gekennzeichnet, daß die Lagesicherungselemente (2) mit zumindest einzelnen der Bauteile bzw. Baugruppen in einem von der Fläche des Montagerahmens (1) in senkrechter Richtung lösbaren Formschluß bringbar sind.

6. Vorrichtung nach den Ansprüchen 4 und 5, dadurch gekennzeichnet, daß die Lagesicherungselemente (2) über die Fläche des Montagerahmens (1) verteilte Stützen sind.

7. Vorrichtung nach den Ansprüchen 4 bis 6, dadurch gekennzeichnet, daß zumindest einige der Lagesicherungselemente (2) gabelförmige Auflagen (6) besitzen.

8. Vorrichtung nach den Ansprüchen 4 bis 6, dadurch gekennzeichnet, daß zumindest einige der Lagesicherungselemente (2) mit einer senkrechten Bewegung selbsttätig lösbare Halterungen, Rastelemente, Klammern oder dgl. tragen.

9. Vorrichtung nach wenigstens einem der Ansprüche 4 bis 8, dadurch gekennzeichnet, daß die Lagesicherungselemente (2) auf dem Montagerahmen (1) verstellbar angebracht sind.

10. Vorrichtung nach wenigstens einem der Ansprüche 4 bis 9, dadurch gekennzeichnet, daß die Halterungen oder Auflagen an den Lagesicherungselementen (2) höhenverstellbar sind.

11. Vorrichtung nach wenigstens einem der Ansprüche 4 bis 10, dadurch gekennzeichnet, daß der Montagerahmen (1) Angriffselemente für eine Hebevorrichtung besitzt oder in eine Hebevorrichtung baulich eingegliedert ist.

12. Vorrichtung nach wenigstens einem der Ansprüche 4 bis 11, dadurch gekennzeichnet, daß zwischen den Trägern (3, 4) des Montagerahmens (1) freie Durchgänge für Roboter, Hilfseinrichtungen oder Werkzeuge ausgespart sind, deren Lage im Montagerahmen (1) auf die Lage der Verbindungsstellen zwischen dem Fahrwerk (7) und dem Aufbau (25) abgestimmt ist.

**Revendications**

1. Procédé de montage de voitures particulières ayant une carrosserie monocoque (25), le groupe moteur (8) ainsi que les unités de transmission (15, 16, 17) et des parties de l'ensemble de roulement (7), places sur un cadre de montage (1) de manière correspondante à leur position ultérieur dans la carrosserie (25), étant approchés de la carrosserie (25) en direction pratiquement verticale par le côté inférieur de la carrosserie (25) et étant fixés à la carrosserie (25), caractérisé en ce que tous les éléments de construction nécessaires au fonctionnement du groupe moteur (8) sont places sur le cadre de montage (1) dans la position définitive correcte, en ce que tous les éléments de construction du système de freinage sont places sur le cadre de montage (1) dans la position définitive correcte et sont reliés les uns aux autres, en ce que les éléments de construction, dans la mesure où ils ne sont pas fixés les une aux autres ou ne prennent pas appui les uns sur les autres, ne sont maintenus en place sur le cadre de montage (1) que par leur propre poids, en ce qu'avant de rapprocher le cadre de montage (1) de la carrosserie (25), il est procédé aux réglages finals sur l'ensemble de roulement (7), en ce qu'avant de rapprocher le cadre de montage (1) de la carrosserie, des essais de fonctionnement sont effectués sur le système de freinage, et en ce qu'avant de rapprocher le cadre de montage (1) de la carrosserie (25), des opérations de réglage et un essai de marche du groupe moteur (8) sont exécutés.

2. Procédé selon la revendication 1, caractérisé en ce que les éléments de construction ou groupes de construction sont positionnés et montés définitivement sur la cadre de montage (1) au moyen de robots ou de dipositifs auxiliaires automatiques.

3. Procédé selon la revendication 1, caractérisé en ce que l'ensemble de roulement (7) est raccordé à la carrosserie au moyen de robots et/ou de dispositifs auxiliaires automatiques.

4. Dispositif pour l'exécution du procédé selon l'une quelconque des revendications 1 à 3, caractérisé par un cadre de montage (1) essentiellement plat et soulevable, composé de longerons et de traverses (3, 4) en forme que correspond approximativement au contour de la carrosserie (25), cadre sur la côté supérieur duquel des éléments d'assujettissement en position (2, 5) pour les éléments de construction ou groupes de construction de l'ensemble de roulement (7) sont disposés de telle manière que les éléments de construction ou groupes de construction puissant y être placés par le haut et puissant être assemblés dans leurs positions relatives ultérieures dans la carrosserie (25).

5. Dispositif selon la revendication 4, caractérisé en ce que les éléments d'assujettissement en position (2) ont une forme telle qu'au moins certains des éléments de construction ou groupes de construction puissant y être placés par emboîtement de telle façon qu'ils puissant être détachés en direction verticale de la surface du cadre de montage (1).

6. Dispositif selon la revendication 4 ou 5, caractérisé en ce que les éléments d'assujettissement en position (2) sont des supports répartis sur toute la surface du cadre de montage (1).

7. Dispositif selon l'une quelconque des revendications 4 à 6, caractérisé en ce que certains au moins des éléments d'assujettissement en position (2) comportent des appuis bifurqués (6).

8. Dispositif selon l'une quelconque des revendications 4 à 6, caractérisé en ce que certains au moins des éléments d'assujetissement en position (2) portent des attaches, des éléments d'encliquetage, des pinces ou similaires qui peuvent être ouverts automatiquement par un mouvement vertical.

9. Dispositif selon l'une quelconque des revendications 4 à 8, caractérisé en ce que les éléments d'assujettissement en position (2) sont montés de façon réglable sur le cadre de montage (1).

10. Dispositif selon l'une quelconque des revendications 4 à 9, caractérisé en ce que les éléments de maintien ou les appuis sur les éléments d'assujettissement en position (2) sont réglables en hauteur.

11. Dispositif selon l'une quelconque des revendications 4 à 10, caractérisé en ce que le cadre de montage (1) comporte des éléments d'accrochage pour un dispositif élévateur ou est incorporé par construction dans un dispositif de levage.

12. Dispositif selon l'une quelconque des revendications 4 à 11, caractérisé en ce qu'il est ménagé, entre les longerons et traverses (3, 4) du cadre de montage (1), des passages libres pour des robots, des dispositifs auxiliaires ou des outils, passages dont la situation dans le cadre de montage (1) correspond à la situation des points d'assemblage entre l'ensemble de roulement (7) et la carrosserie (25).

**Claims**

1. Method for assembly of passenger vehicles with self-supporting superstructures (25), in which the drive group (8) including the drive units (15, 16, 17) and parts of the chassis (10) are introduced to the superstructure (25) on an assembly frame (1), in a manner corresponding to their future positions in the superstructure (25), in an essentially vertical direction from the underside of the superstructure (25) and are connected to the superstructure (25), characterized in that all components needed for the functioning of the drive group (8) are laid on the assembly frame (1) in their correct final positions, in that all components of the braking equipment are laid on the assembly frame (1) in their correct final positions and are connected to one another, in that the components, where they are not attached to or supported by one another, are located on the assembly frame (1) only by their own weight, in that final adjustments are carried out on the chassis (7) before the assembly frame (1) is introduced to the superstructure (25), in that function tests are carried out on the brake equipment before the assembly frame (1) is introduced to the superstructure, and in that adjustment work and a test run of the drive group (8) are carried out before the assembly frame (1) is introduced to the superstructure (25).

2. Method according to Claim 1, characterized. in that positioning and final assembly of the components and assemblies on the assembly frame (1) are carried out with robots or automatic auxiliary equipment.

3. Method according to Claim 1, characterized in that the chassis (7) is connected to the superstructure (25) by robots and/or automatic auxiliary equipment.

4. Device for carrying out the method according to Claims 1 to 3, characterized by an essentially plane, liftable, assembly frame (1) made of longitudinal and transverse members (3, 4) in a shape corresponding approximately to the outline of the upper structure (25) on the upper side of which locating elements (2, 5) for the components and assemblies of the chassis (7) are positioned in such a way that the components and assemblies can be placed on them from above and assembled together in their future relative positions in the superstructure (25).

5. Device according to Claim 4, characterized in that the locating elements (2) can be brought into a positive engagement, which can be released in a direction perpendicular to the surface of the assembly frame (1), with at least a few of the components and assemblies.

6. Device according to Claims 4 and 5, characterized in that the locating elements (2) are supports distributed over the surface of the assembly frame (1).

7. Device according to Claims 4 to 6, characterized in that at least some of the locating elements (2) have fork-shaped supports (6).

8. Device according to Claims 4 to 6, characterized in that at least some of the locating elements (2) carry holding devices, locking elements, clamps or the like which can be released automatically with a vertical movement.

9. Device according to at least one of Claims 4 to 8, characterized in that the locating elements (2) on the assembly frame (1) are installed in such a way that they can be adjusted.

10. Device according to at least one of Claims 4 to 9, characterized in that the holding devices or. supports on the locating elements (2) can be adjusted for height.

11. Device according to at least one of Claims 4 to 10, characterized in that the assembly frame (1) has engagement elements for a lifting device or is icorporated structurally into a lifting device.

12. Device according to at least one of Claims 4 to 11, characterized in that free through-ways, the positions of which in the assembly frame (1) are adapted to suit the positions of the connecting points between the chassis (7) and the superstructure (25), for robots, auxiliary equipment or tools are left open between the members (3, 4) of the assembly frame (1).

FIG1

EP 0 294 368 B1

FIG2